# EUROPÄISCHE PATENTSCHRIFT

(11) **EP 1 797 290 B1**
(45) Veröffentlichungstag und Bekanntmachung des Hinweises auf die Patenterteilung: **16.06.2010**
(21) Anmeldenummer: 05789586.4
(22) Anmeldetag: 09.09.2005
(51) Int. Cl.: F01N 3/20, F16K 31/122, F16K 31/126, B01D 53/90, B05B 1/30

(54) **DOSIERSYSTEM ZUR SCHADSTOFFREDUKTION IN KRAFTFAHRZEUGABGASEN**
METERING SYSTEM FOR REDUCING POLLUTANTS IN MOTOR VEHICLE EXHAUST GASES
SYSTEME DE DOSAGE POUR DIMINUER LES SUBSTANCES NUISIBLES DANS LES GAZ D'ECHAPPEMENT DE VEHICULES A MOTEUR

(30) Priorität: 02.10.2004 DE 102004048075
(43) Veröffentlichungstag der Anmeldung: 20.06.2007
(73) Patentinhaber: ROBERT BOSCH GMBH, 70442 Stuttgart (DE)
(72) Erfinder: RIPPER, Wolfgang, 70327 Stuttgart (DE); SCHALLER, Johannes, 71665 Vaihingen An Der Enz (DE); BUERGLIN, Markus, 71254 Ditzingen (DE); MEINGAST, Ulrich, 70469 Stuttgart (DE); HEILIG, Dirk, 71254 Ditzingen (DE)
(86) Internationale Anmeldenummer: PCT/EP2005/054502
(87) Internationale Veröffentlichungsnummer: WO 2006/037710

(56) Entgegenhaltungen:
- WO-A-2005/005799
- DE-A1- 2 900 847
- DE-A1- 10 139 142

## Beschreibung

### Technisches Gebiet

Ein bewährtes Verfahren zur Reduktion von Schadstoffen, insbesondere zur Reduktion von Stickoxiden im Abgas mager betriebener Verbrennungsmotoren, ist die Reduktion der Stickoxide mittels geeigneter chemischer Reduktionsmittel. Den bekannten Verfahren ist gemeinsam, dass fluide (d h. flüssige oder gasförmige), schadstoffreduzierende Medien in einen Abgastrakt eines Verbrennungsmotors eingespritzt werden, wo sie mit den Schadstoffen in den Abgasen reagieren und diese chemisch umwandeln. Es wird daher im folgenden ein Dosiersystem zur Dosierung derartiger fluider, schadstaffreduzierender Medien vorgeschlagen, welches für Reduktion von Schadstoffen in Abgasen von Kraftfahrzeugen eingesetzt werden kann.

### Stand der Technik

Bei dem sogenannten Ammoniak-SCR-Verfahren wird insbesondere im Nutzfahrzeugbereich als Reduktionsmittel Ammoniak im Abgas vor einem entsprechenden Reduktionsmittelkatalysator benötigt. Dabei wird bei heutigen Verfahren oftmals durch Einblasen eines wässrigen Harnstoff-Luft-Aerosols mittels Druckluft in das Motorabgas durch Thermolyse und anschließende katalysierte Hydrolyse das eigentliche Reduktionsmittel Ammoniak freigesetzt.

Im Hinblick auf einen möglichen Einsatz in Personenkraftwagen ist dieses Verfahren mit Drucklufteinblasung aufgrund hoher Systemkomplexität (Kosten, Bauraum, Druckluftversorgung) allerdings als wenig marktgerecht einzustufen.

Ein weiteres Verfahren zur Vermeidung der Druckluftabhängigkeit sieht die Einspritzung einer Harnstofflösung (AdBlue) in die Motorenabgase vor. Zu diesem Zweck kommen beispielsweise Pumpen zur Druckbeförderung des AdBlue sowie selbst aufbereitende Ventile zum Einsatz.

Zur Anwendung kommen dabei oftmals Ventile, wie sie aus der Benzineinspritzung bekannt sind und welche verschiedene Nachteile aufweisen. Schwierigkeiten bereitet bei diesen Ventilen beispielsweise die Notwendigkeit der Kühlung der (zumeist elektrischen) Ventile, welche unmittelbar an der heißen Abgasanlage angebracht sind. Weiterhin ist die Wintertauglichkeit derartiger Systeme als problematisch einzustufen. Bei Temperaturen unter -11°C gefriert die gebräuchliche Harnstof-Wasser-Lösung und dehnt sich aus. Somit ist zur Erzielung einer Wintertauglichkeit derartiger Ventile und weiterer betroffener Systemkomponenten (Pumpen, Druckregelung usw.) ein erheblicher konstruktiver und damit die Systemkomplexität erhöhender Aufwand in Kauf zu nehmen (z. B. eine eisdruckfeste Konstruktion, rücksaugende Pumpen etc.).

In DE 196 46 643 C1 wird eine Anlage zur Stickoxid-Reduktionsmitteleinspritzung in einen Abgasstrom beschrieben. Dabei wird das Reduktionsmittel durch eine Mehrzahl feiner Düsenöffnungen hindurch in Form feiner Strahlen mittels lokaler, getakteter Überdruckerzeugung steuerbar in den Abgasstrom eingespritzt. Als Düsen werden dabei piezoelektrisch gesteuerte Düsen ähnlich den Düsen in piezoelektrischen Tintenstrahldruckköpfen oder Düsen mit getakteten Heizwiderstandselementen, ähnlich bekannten Bubble-Jet-Tintenstrahldruckköpfen, eingesetzt. Die in der DE 196 46 643 C1 beschriebene Anordnung ist jedoch apparativ aufwändig, insbesondere hinsichtlich der aggressiven Fluide störanfällig und teuer. Eine ähnliche Anlage ist auch im DE 101 39 142 A gezeigt.

### Darstellung der Erfindung

Es wird daher ein Dosiersystem zur Dosierung fluider, schadstoffreduzierender Medien, insbesondere wässriger Harnstofflösungen, vorgeschlagen, bei welchem mindestens eine Dosierpumpe eingesetzt wird. Die Dosierung soll in ein Kraftfahrzeug-Abgassystem erfolgen, welcher insbesondere einen Katalysator aufweisen kann.

Das Dosiersystem weist mindestens einen Vorratsbehälter zur Speicherung mindestens eines fluiden, schadstoffreduzierenden Mediums auf. Bei diesem fluiden, schadstoffreduzierenden Medium kann es sich beispielsweise um eine wässrige Harnstofflösung handeln. Weiterhin weist das Dosiersystem mindestens eine mit dem mindestens einen Vorratsbehälter verbundene Dosierpumpe auf, wobei diese Verbindung direkt oder über ein Rohrleitungssystem erfolgen kann. Aufgabe der Dosierpumpe ist es insbesondere, das mindestens eine fluide, schadstoffreduzierende Medium mit vorgegebenem Druck und/oder mit vorgegebener Volumenflussrate zu transportieren.

Unter einer Dosierpumpe ist dabei - im Gegensatz zu herkömmlichen, zumeist mit einfachen Membranpumpen ausgestatteten Systemen - eine Pumpe zur Beförderung eines Fluids zu verstehen, bei welcher die geförderte Volumenflussrate mit einer vorgegebenen Genauigkeit einstellbar ist. Es kann jedoch darunter auch eine Pumpe verstanden werden, welche ein bestimmtes Volumen transportiert, wobei das zu transportierende Volumen mit einer vorgegebenen Genauigkeit einstellbar sein soll. Weiterhin kann unter einer Dosierpumpe auch eine Pumpe verstanden werden, bei der die Beförderung des Fluids mit einem vorgegebenen Druck erfolgt, wobei der Druck beispielsweise mit einer vorgegebenen Genauigkeit einstellbar ist.

Weiterhin weist das Dosiersystem mindestens eine mit der mindestens einen Dosierpumpe direkt oder über ein Rohrleitungssystem verbundene selbstöffnende Düse auf. Diese mindestens eine selbstöffnende Düse verfügt über mindestens eine Zufuhröffnung für die Zufuhr fluider Medien sowie über mindestens eine Düsenöffnung, welche derart ausgestaltet ist, dass durch die Düsenöffnung fluide Medien in das Kraftfahrzeug-Abgassystem eingespritzt werden können.

Unter "selbstöffnend" ist dabei eine Düse zu verstehen, welche, solange der Druck des zugeführten Fluids einen vorgegebenen Mindestdruck unterschreitet, geschlossen ist. Erreicht der Druck des Fluids hingegen den Mindestdruck oder überschreitet er diesen, so öffnet die Düse und dosiert Fluid in das Abgassystem des Kraftfahrzeugs.

Die mindestens eine selbstöffnende Düse ist derart ausgestatlet, dass sie einen Düsenkörper mit einem Federraum und einem Nadelraum aufweist. Der Nadelraum soll dabei mindestens eine Zufuhröffnung für die Zufuhr fluider Medien und mindestens eine Düsenöffnung aufweisen.

Weiterhin soll mindestens eine Düsennadel in den Nadelraum eingelassen sein, welche beweglich und/oder drehbar gelagert ist, wobei die Düsennadel in mindestens einer Position und/oder Orientierung die mindestens eine Düsenöffnung für fluide Medien dicht verschließt und in mindestens einer weiteren position und/oder Orientierung die Düsenöffnung für fluide Medien freigibt.

Weiterhin soll mindestens ein Federelement in den Federraum eingelassen sein, welches eine Kraft und/oder ein Drehmoment auf die mindestens eine Düsennadel ausübt. Dabei soll ohne

Einwirkung zusätzlicher Kräfte und/oder Drehmomente auf die mindestens eine Düsennadel diese die Düsenöffnung für fluide Medien dicht verschließen. Das Federelement wirkt also dergestalt, dass im "Normalzustand" die mindestens eine Düsenöffnung verschlossen ist.

Vorteilhafterweise übt ein mit einem Druck p₁ in den mindestens einen Nadelraum eintretendes fluides Medium eine Kraft und/oder ein Drehmoment auf die mindestens eine Düsennadel aus, welche beziehungsweise welches der Kraft beziehungsweise dem Drehmoment durch das mindestens eine Federelement entgegenwirkt. Übersteigt dieser Druck p₁ einen vorgegebenen Mindestdruck pₘᵢₙ (welcher sich beispielsweise aus dem im Federraum herrschenden Atmosphärendruck p₂ und der durch das mindestens eine Federelement ausgeübten Kraft zusammensetzt), so soll die mindestens eine Düsenöffnung für fluide Medien geöffnet werden.

Weiterhin weist die selbstöffnende Düse mindestens ein Dichtelement auf, welches ein Eindringen fluider Medien aus dem mindestens einen Nadelraum in den mindestens einen Federraum verhindert oder reduziert. Vorteilhafterweise ist dieses mindestens eine Dichtelement ganz oder teilweise flexibel ausgestaltet und verbindet das mindestens eine Federelement und/oder die mindestens eine Düsennadel flexibel mit dem Düsenkörper.

Dies kann insbesondere dadurch erfolgen, dass das mindestens eine Dichtelement mindestens eine flexible Membran aufweist. Unter einer flexiblen Membran ist dabei ein flacher flexibler Körper zu verstehen, dessen laterale Ausdehnung seine Ausdehnung in einer dazu senkrechten Dimension weit (z. B. um einen Faktor 10 oder mehr) überschreitet, beispielsweise eine flexible Scheibe. Die Membran muss dabei nicht geschlossen sein, sondern kann insbesondere auch ein oder mehrere Löcher bzw. Bohrungen aufweisen. So kann die Membran beispielsweise als dünne Kreisringscheibe ausgestaltet sein, welche den Zwischenraum zwischen dem Düsenkörper und der Düsennadel ganz oder teilweise ausfüllt, wobei eine Dichtung zwischen dem Federraum und dem Nadelraum gewährleistet sein soll.

Vorteilhafterweise ist das Rohrleitungssystem und/oder die mindestens eine Dosierpumpe und/oder die mindestens eine selbstöffnende Düse ganz oder teilweise mittels mindestens eines Heizelements beheizbar ausgestaltet. Dieses mindestens eine Heizelement kann beispielsweise mittels eines elektronischen Steuergeräts gesteuert werden, wobei dieses Steuergerät beispielsweise mit einem entsprechenden Temperatursensor ausgestattet sein kann. Auf diese Weise lässt sich insbesondere eine Vereisung des Dosiersystems bei niedrigen Betriebstemperaturen vermeiden. Bei eingefrorenem Dosiersystem kann der Temperatursensor weiterhin für eine Steuerung einer Auftauvorgangs genutzt werden.

Weiterhin kann das Dosiersystem zusätzlich mindestens ein Belüftungsventil aufweisen, welches derart ausgestaltet ist, dass es den Zufluss von Luft und/oder Schutzgas in die mindestens eine Dosierpumpe und/oder die mindestens eine selbstöffnende Düse steuern kann. Die Dosierpumpe kann entweder selbst Luft und/oder Schutzgas ansaugen und damit auch das Dosierventil entleeren, oder es kann bereits unter Druck stehendes Schutzgas und/oder Luft zugeführt werden, so dass die Dosierpumpe und das Dosierventil ausgeblasen werden. Diese Ausgestaltung erhöht insbesondere die Gefrierfestigkeit des Dosiersystems.

Die mindestens eine Pumpe und die mindestens eine selbstöffnende Düse sind vorzugsweise eisdruckfest ausgelegt. Falls dies nicht möglich ist oder falls aus anderen Gründen ein Betrieb bei tiefen Temperaturen erforderlich ist, besteht die Möglichkeit, über das mindestens eine Belüftungsventil, welches beispielsweise vor der mindestens einen Pumpe angeordnet sein kann, beim Abstellen des Kraftfahrzeugmotors Luft in die mindestens eine Pumpe und/oder die mindestens eine selbstöffnende Düse zu befördern. Dabei kann die geringe Restmenge an Fluid in der Pumpe und/oder der Düse, beispielsweise in das Abgassystem entleert werden. Die hierbei zu erwartende Menge kann als unkritisch angesehen werden und kann beispielsweise durch ein Steuergerät erfasst, zwischengespeichert und bei einem erneuten Start des Kraftfahrzeugmotors in eine weitere Berechnung der zu dosierenden Menge des Fluids einbezogen werden. In diesem Fall sollte insbesondere die mindestens eine Dosierpumpe so ausgelegt sein, dass sie einen Druck zur selbstöffnenden Düse hin auch mit Luft oder Schutzgas als Medium erzeugen kann.

Das Dosiersystem ist insbesondere vorteilhafterweise so ausgestaltet, dass es mindestens ein elektronisches Steuergerät aufweist. Dieses kann insbesondere die mindestens eine Dosierpumpe und/oder das mindestens eine Belüftungsventil und/oder das mindestens eine Heizelement ansteuern. Bei diesem elektronischen Steuerungsgerät handelt es sich idealerweise um ein schon vorhandenes Steuergerät, beispielsweise das in nahezu allen Kraftfahrzeugen vorhandene Motorsteuerungsgerät (Engine Control Unit, ECU). Es sind jedoch auch spezielle Dosiersteuerungsgeräte optional denkbar.

Insbesondere kann das Dosiersystem auch so ausgestaltet sein, dass an einer oder mehreren Stellen im Dosiersystem eine Temperatur und/oder ein Druck des mindestens einen fluiden, schadstoffreduzierenden Mediums mit Hilfe eines oder mehrerer Sensoren erfasst wird. Diese Informationen können beispielsweise zur Optimierung der Steuerung der mindestens einen Dosierpumpe, des mindestens einen Belüftungsventils oder des mindestens einen Heizelements durch das mindestens eine elektronische Steuergerät verwendet werden.

### Zeichnungen

Anhand der Zeichnungen wird die Erfindung nachstehend beschrieben. Die Erfindung ist jedoch nicht auf die dargestellten Ausführungsbeispiele beschränkt. Gleiche Bezugsziffern kennzeichnen dabei gleiche bzw. einander in ihrer Funktion entsprechende Bauteile.

Es zeigt:
- Figur 1: ein Beispiel eines Systems zur selektiven katalytischen Reduktion (SCR) in Nutzfahrzeugen,
- Figur 2: ein erfindungsgemäßes Dosiersystem mit einer Dosierpumpe und einer selbstöffnenden Düse,
- Figur 3: eine erfindungsgemäß selbstöffnende Düse zur Einspritzung fluider, schadstoffreduzierender Medien in ein Abgassystem,
- Figur 4: eine Schnittdarstellung einer ersten Ausführungsvariante der selbstöffnenden Düse gemäß Figur 3 entlang einer Schnittebene A - A in Figur 3,
- Figur 5: eine Schnittdarstellung einer zweiten Ausführungsvariante der selbstöffnenden Düse gemäß Figur 3 entlang der Schnittebene A - A in Figur 3, und
- Figur 6: eine Schnittdarstellung einer dritten Ausführungsvariante der selbstöffnenden Düse gemäß Figur 3 entlang der Schnittebene A - A in Figur 3.

### Ausführungsvarianten

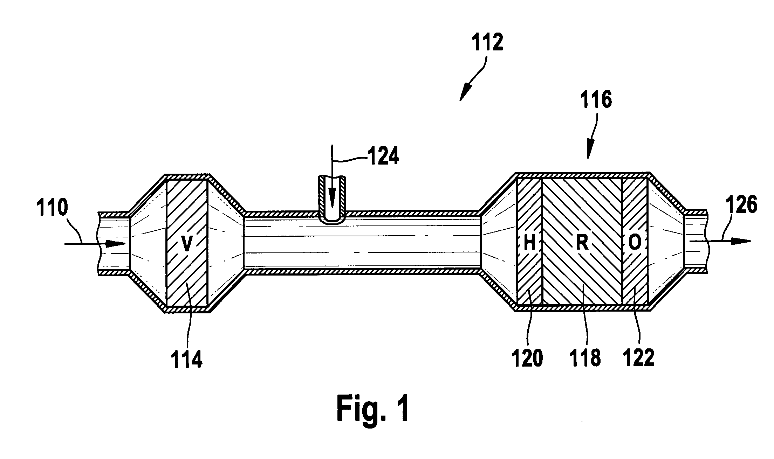

In Figur 1 ist exemplarisch ein System zur selektiven katalytischen Reduktion (SCR) dargestellt, wie es insbesondere im Nutzfahrzeugbereich von Interesse ist.

Dabei werden Abgase 110 von einem Verbrennungsmotor in einen zweistufigen Katalysator 112 eingebracht. Der zweistufige Katalysator 112 weist einen Vorkatalysator 114 und einen Hauptkatalysator 116 auf. Letzterer wiederum weist einen Reduktionskatalysator 118, einen Hydrolysekatalysator 120 und einen Oxidationskatalysator 122 auf. Das Reduktionsmittel 124 wird beispielsweise luftunterstützt vor dem Reduktionskatalysator 118 in das Abgassystem eingebracht. Dieses wässrige Aerosol 124 wird durch Thermolyse und anschließende katalysierte Hydrolyse zersetzt und bildet das eigentliche Reduktionsmittel Ammoniak, welches wiederum mit den Stickoxiden der Motorenabgase 110 reagiert und diese in Stickoxid reduzierte Abgase 126 umwandelt. Die Anwendung des SCR-Verfahrens ist jedoch nicht auf den in Figur 1 dargestellten Katalysatortyp beschränkt, sondern es lassen sich auch andere Ausführungen von Katalysatoren einsetzen. So sind beispielsweise die Katalysatoren 114, 120 und 122 nicht zwingend erforderlich.

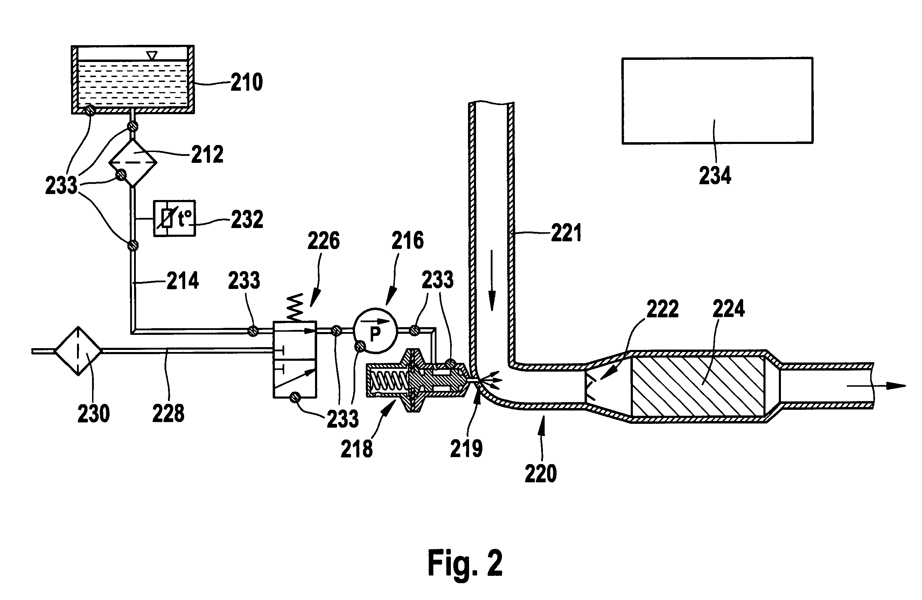

In Figur 2 ist ein erfindungsgemäßes Dosiersystem zum Dosieren fluider, schadstoffreduzierender Medien mittels einer Dosierpumpe 216 und einer Düseneinheit 218 dargestellt. In diesem Beispiel wird eine Harnstoff-Wasser-Lösung (AdBlue) eingesetzt, welche in einem entsprechenden Vorratstank 210 gespeichert ist. Der Vorratstank 210 ist über einen Filter 212 und ein Rohrleitungssystem 214 mit einer Dosierpumpe 216 verbunden. Der Filter 212 dient insbesondere dazu, ein Eindringen von Partikeln aus dem Vorratstank 210 in die Dosierpumpe 216 und/oder die Düseneinheit 218 zu verhindern.

Unmittelbar in die Dosierpumpe 216 ist eine selbstöffnende Düseneinheit 218 integriert, welche bei einem bestimmten Druck öffner und die geförderte Harnstoffmenge an der Einspritzstelle 219 in ein Abgassystem 220 einsprüht. Wie in Figur 2 dargestellt, weist in diesem Ausführungsbeispiel das Abgassystem 220 ein Abgasrohr 221, einen statischen Mischer 222 und einen Katalysator 224 auf.

Dieses Einsprühen ist bezüglich Sprühbild und Tropfengröße so optimiert, dass es optimal an die Einspritzstelle 219 angepasst ist. Alternativ ist auch eine Variante mit einem oder mehreren schnurförmigen Strahlen denkbar, bei der der mindestens eine schnurförmige Strahl im Abgassystem 220 auf eine (in Figur 2 nicht dargestellte) Prallplatte oder einen Prallkörper gerichtet ist und dadurch entsprechend verteilt wird.

Unmittelbar vor der Dosierpumpe 216 ist ein Belüftungsventil 226 in das Rohrleitungssystem 214 eingelassen, über welches die Dosierpumpe 216 und die Düseneinheit 218 über ein Luftleitungssystem 228 und einen Luftfilter 230 mit Luft befüllt werden können. Dies ist insbesondere beim Abschalten des Motors bei geringen Umgebungstemperaturen ein wirksamer Schutz gegen Gefrierschäden am Dosiersystem.

Zusätzlich sind das Rohrleitungssystem 214, das Belüftungsventil 226, die Dosierpumpe 216 und die Düseneinheit 218 beheizbar ausgelegt. Die Temperatur der Harnstofflösung im Rohrleitungssystem 214 wird ggf. durch einen oder mehrere Temperatursensoren 232 überwacht, was beispielsweise zur rechnerischen Korrektur des Massenstroms und somit zum Ausgleich von temperaturbedingten Dichteschwankungen genutzt werden kann. Die Temperatursensoren 232 können an verschiedenen Stellen im System angeordnet sein. Weiterhin sind an verschiedenen Stellen des Systems, insbesondere am Vorratstank 210, am Filter 212, am Belüftungsventil 226, an der Dosierpumpe 216, am Dosierventil 218 sowie dazwischen an verschiedenen Stellen im Rohrleitungssystem 214 wahlweise verschiedene Heizelemente 233 angeordnet (in Figur 2 schematisch dargestellt), welche sowohl zur Regelung der Temperatur als auch zum Auftauen des Systems bei niedrigen Umgebungstemperaturen eingesetzt werden können.

Weiterhin sind im Rohrleitungssystem 214 sowie in der Dosierpumpe 216 verschiedene Drucksensoren angeordnet, welche ganz oder teilweise elektronisch ausgelesen und überwacht werden können. So kann insbesondere ein Drucksensor zwischen der Dosierpumpe 216 und der Düseneinheit 218 angeordnet sein, dessen Messdaten zur Verbesserung der Massenstromberechnung und zur Überwachung des Systems beitragen können.

Das dargestellte Dosiersystem wird im Betrieb des Verbrennungsmotors ständig vom Motorsteuerungsgerät 234 überwacht und gesteuert. So wertet das Motorsteuerungsgerät 234 ständig alle Druck- und Temperatursignale aus, steuert die Pumpleistung der Dosierpumpe 216 und steuert die Tätigkeit des Belüftungsventils 226. Auch ein (in Fig. 2 nicht dargestelltes) Heizsystem kann eingesetzt und von dem Motorsteuerungsgerät 234 gesteuert werden, beispielsweise um bei niedrigen Betriebstemperaturen ein Einfrieren des Rohrleitungssystems 214 zu verhindern.

Das in Fig. 2 dargestellte Dosiersystem weist gegenüber herkömmlichen Systemen eine Reihe entscheidender Vorteile auf. So ist das Dosiersystem, da beispielsweise anstelle einer Membranpumpe und eines Dosierventils die kostengünstigeren Bauteile Dosierpumpe 216 und selbstöffnende Düseneinheit 218 verwendet werden, kostengünstig herzustellen.

Weiterhin ist das beschriebene Dosiersystem mit einer geringen Baugröße herstellbar. Dies ermöglicht insbesondere auch den Einsatz in Personenkraftwagen. Bislang übliche Systeme sind hingegen aufgrund ihrer hohen Baugröße zumeist lediglich in Lastkraftwagen einsetzbar. Auch eine Druckluftversorgung ist nicht erforderlich, was die Baugröße des Systems zusätzlich verringert.

Das beschriebene Dosiersystem weist zudem gegenüber herkömmlichen Systemen eine erheblich verringerte Anfälligkeit gegenüber Störungen auf, insbesondere auch bei niedrigen Temperaturen. Dies wird insbesondere durch die Möglichkeit des Belüftens mittels des Belüftungsventils 226 und die Möglichkeit einer Beheizung des Dosiersystems gewährleistet.

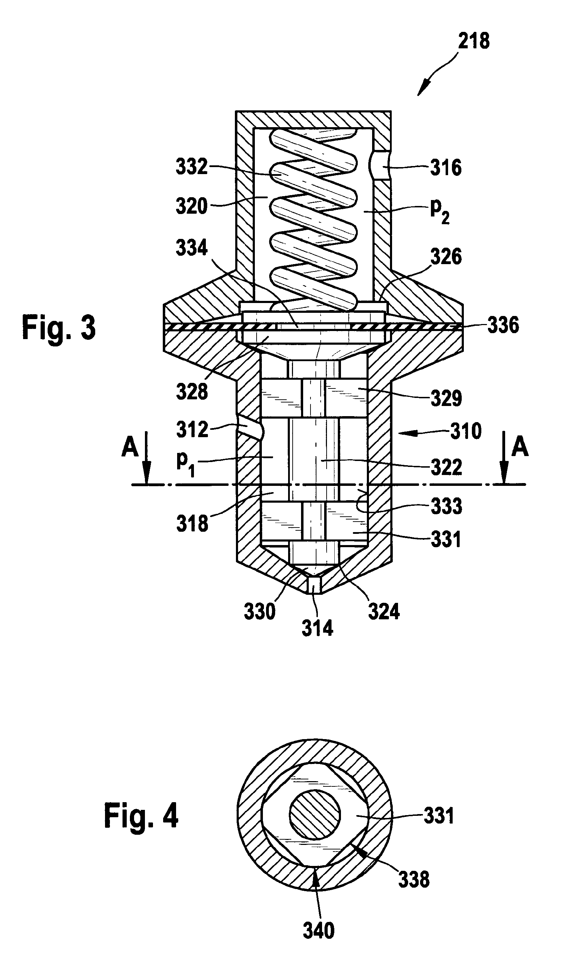

In Figur 3 ist die integrierte Düseneinheit 218 im Detail dargestellt. Die Düseneinheit 218 weist einen Düsenkörper 310 auf, welcher mit einer Zufuhröffnung 312 für die Harstofflösung, einer Düsenöffnung 314 und einer Druckentlastungsöfnung 316 versehen ist. Das Innere des Düsenkörpers 310 ist unterteilt in einen Nadelraum 318 und einen Federraum 320.

Im Nadelraum 318 ist eine Düsennadel 322 vertikal beweglich gelagert. Diese kann sich innerhalb eines vorgegebenen Bereiches auf und ab bewegen. Dieser Bereich der Auf- und Abbewegung der Düsennadel 322 ist nach unten begrenzt durch die kegelförmige Spitze 330 der Düsennadel 322 und einen konischen Anschlag 324 und nach oben durch den Anschlagsstempel 328 und den Anschlag 326. Die Düsennadel 322 wird im Nadelraum 318 geführt durch die Führungselemente 329 und 331, welche an der Innenfläche 333 des Nadelraums 318 spielfrei oder mit leichtem mechanischen Spiel entlanggleiten können. Die Düsennadel 322 ist an ihrem unteren Ende mit einer kegelförmigen Spitze 330 versehen, welche in der (in Figur 3 dargestellten) unteren Position der Düsennadel die Düsenöffnung 314 dicht verschließt.

Im Federraum 320 ist eine Spiralfeder 332 vertikal gelagert, welche eine Druckkraft auf die Düsennadel 322 ausübt, so dass (ohne Druckbeaufschlagung durch das Fluid) die Düsennadel 322 gegen den unteren Anschlag 324 gepresst wird, wodurch die Düsenöffnung 314 verschlossen wird. Die Düsennadel 322 weist in ihrem Anschlagsstempel 328 eine ringförmige Nut 334 auf. In die Nut 334 eingelassen ist eine kreisringförmige Elastomermembran 336, welche die Düsennadel 322 elastisch mit dem Düsenkörper 310 verbindet und welche den Nadelraum 318 dicht gegen den Federraum 320 abschließt.

Die ringförmige Elastomermembran 336 verhindert, dass Harnstofflösung vom Nadelraum in den Federraum 332 eindringen kann (Leckagestrom). Die Düse 218 benötigt somit keine Rückleitung, mit der eine Leckagemenge zurückgeführt werden müsste. Weiterhin bewirkt die ringförmige Elastomermembran 336, dass sich eine Druckdifferenz (p₁ - p₂) zwischen dem Nadelraum 318 und dem Federraum 320 aufbauen kann. Durch die Druckentlastungsöffnung 316 ist gewährleistet, dass im Federraum 320 stets Atmosphärendruck herrscht.

Alternativ kann die Druckentlastungsöffnung 316 auch, beispielsweise mittels eines Rohres, mit Abgasdruck beaufschlagt werden. Insbesondere kann es sich dabei um den Druck im Abgassystem 220 in der Nähe der Einspritzstelle 219 handeln. Diese Weiterbildung bietet den Vorteil einer verbesserten Dosiermengenkonstanz.

Beim Einspritzvorgang fördert die Dosierpumpe 216 Harnstofflösung durch die Zufuhröffnung 312 in den Nadelraum 318, wodurch sich ein Druck p₁ im Nadelraum 318 aufbauen kann. Sobald ein vorgegebener Öffnungsdruck, welcher durch die Federkraft der Spiralfeder 332 und den Druck p₂ im Federraum 320 bestimmt ist, erreicht und überschritten wird, öffnet die Düsennadel 322, d.h. die Düsennadel 322 bewegt sich von der in Figur 3 dargestellten unteren Stellung nach oben, bis der Anschlagsstempel 328 die obere Anschlagsfläche 326 erreicht. Dieser Hub ist ausreichend zur Freigabe eines nötigen Durchflussquerschnitts zwischen Düsennadel 322 und Einspritzöffnung 314, so dass Harnstofflösung in das Abgassystem 220 eingespritzt wird.

Zum Ende des Einspritzvorgangs sinkt, infolge einer entsprechenden Ansteuerung der Dosierpumpe 216 durch das Motorsteuerungsgerät 234 der Druck p₁ entsprechend wieder unter den Öffnungsdruck. Die Düsennadel 322 bewegt sich wieder in ihre untere Position, wobei sie die Düsenöffnung 314 wieder dicht verschließt.

In den Figuren 4 bis 6 ist jeweils eine Schnittdarstellung der integrierten, selbstöffnenden Düseneinheit 218 durch die Ebene A - A in Figur 3 dargestellt, wobei verschiedene Ausgestaltungen des unteren Führungselementes 331 dargestellt sind. Diese Ausgestaltungen ermöglichen ein verlustfreies Strömen der Harnstofflösung von der Zufuhröffnung 312 zur Düsenöffnung 314.

In der in Figur 4 dargestellten Variante weist das untere Führungselement 331 eine Kreisringscheibe auf, an deren Umfang äquidistant verteilt vier Abflachungen 338 eingefräst sind, an welchen Harnstofflösung nach unten zur Düsenöffnung 314 strömen kann. Die Funktion der Führung der Düsennadel 322 wird durch die verbleibenden, nicht abgeflachten Führungssegmente 340 wahrgenommen.

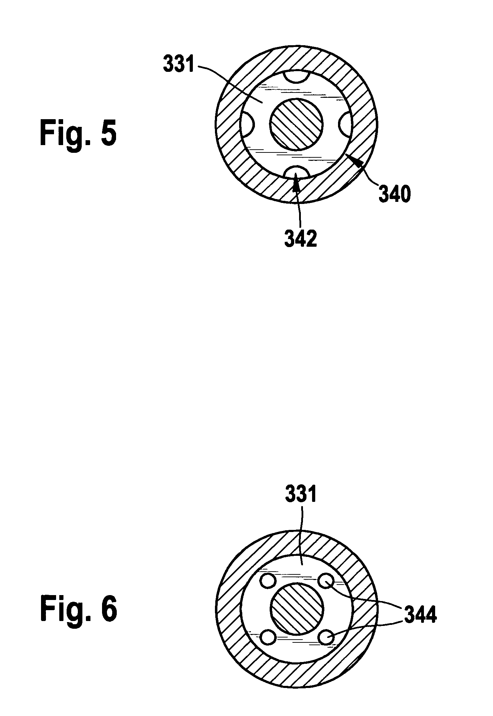

In der in Figur 5 dargestellten Variante weist das Führungselement 331 ebenfalls eine Kreisringscheibe auf, welche jedoch in diesem Fall anstelle der Abflachungen 338 vier gleichmäβig verteilte axiale Nute 342 aufweist. Diese Nute haben im dargestellten Ausführungsbeispiel einen abgerundeten Querschnitt. Harnstofflösung kann durch diese Nute 342 zur Düsenöffnung 314 strömen. Zwischen den Nuten 342 sind wiederum vier Führungssegmente 340 angeordnet, welche die Düsennadel 322 führen.

In Figur 6 ist eine weitere Variante dargestellt, bei der das Führungselement 331, welches wiederum eine Kreisringscheibe aufweist, vier kreisförmige Bohrungen 344 aufweist. Harnstofflösung kann durch diese vier Bohrungen 344 zur Düsenöffnung 314 strömen. Die Führung der Düsennadel 322 erfolgt in diesem Ausführungsbeispiel entlang des gesamten Umfangs der Kreisringscheibe.

Die in den Figuren 4 bis 6 dargestellten Ausführungsvarianten sind lediglich Beispiele für mögliche Ausgestaltungen. Weitere konstruktive Möglichkeiten erschließen sich dem Fachmann. Entscheidend ist jedoch in allen Fällen, dass Harnstofflösung von der Zufuhröffnung 312 durch einen entsprechenden Fließkanal zur Düsenöffnung 314 gelangen kann.

Die beschriebene integrierte selbstöffnende Düseneinheit 218 bietet im Vergleich zu herkömmlichen Systemen zahlreiche Vorteile. So bietet insbesondere die ringförmige Elastomermembran 336, welches eine Leckage der fluidischen Medien in der selbstöffnenden Düsenenheit 218 verhindert, den Vorteil, dass auf eine Rückleitung der fluidischen Medien in den Vorratsbehälter 210 verzichtet werden kann. Dieses Erfordernis der Rückleitung ist ein großer Nachteil bei herkömmlichen Düsensystemen, wie sie beispielsweise bei der Dieseleinspritzung in den Verbrennungsraum eines Verbrennungsmotors eingesetzt werden.

Die Verwendung einer beweglichen Düsennadel 322, die über die Spiralfeder 332 vorgespannt ist, gewährleistet einen hinreichend großen Hub zur Freigabe des nötigen Durchflussquerschnitts zwischen Düsennadel 322 und Düsenöffnung 314. Nach Ende des Dosiervorgangs, also sobald die Dosierpumpe 216 aufhört, das fluidische Medium mit dem vorgegebenen Mindestdruck bereitzustellen, schließt sich die selbstöffnende Düseneinheit 218 wieder selbständig und verhindert ein ungewolltes Austreten oder Auskristallisieren des geförderten fluiden Mediums. Weiterhin kann die selbstöffnende Düseneinheit 218 insbesondere auch bei hohen Volumenflussraten ohne weitere Kühlmaßnahmen auskommen.

### Bezugszeichenliste

- 110: Abgase vom Verbrennungsmotor
- 112: zweistufiger Katalysator
- 114: Vorkatalysator
- 116: Hauptkatalysator
- 118: Reduktionskatalysator
- 120: Hydrolysekatalysator
- 122: Oxidationskatalysator
- 124: Harnstoff-Luft-Aerosol
- 126: Stickoxid-reduzierte Abgase

- 210: Vorratstank
- 212: Filter
- 214: Rohrleitungssystem
- 216: Dosierpumpe
- 218: integrierte, selbstöffnende Düseneinheit
- 219: Einspritzstelle
- 220: Abgassystem
- 221: Abgasrohr
- 222: statischer Mischer
- 224: Katalysator
- 226: Belüftungsventil
- 228: Luftleitungssystem
- 230: Luftfilter
- 232: Temperatursensor
- 233: Heizelemente
- 234: Motorsteuerungsgerät (Engine Control Unit, ECU)

- 310: Düsenkörper
- 312: Zufuhröffnung
- 314: Düsenöffnung
- 316: Druckentlastungsöffnung
- 318: Nadelraum
- 320: Federraum
- 322: Düsennadel
- 324: untere Anschlagsfläche
- 326: obere Anschlagsfläche

- 328: Anschlagsstempel
- 329: oberes Führungselement
- 330: Kegelspitze der Düsennadel
- 331: unteres Führungselement
- 332: Spiralfeder
- 333: Innenfläche des Nadelraums 318
- 334: ringförmige Nut im Anschlagsstempel 328
- 336: ringförmige Elastomermembran
- 338: Abflachungen
- 340: Führungssegmente
- 342: Nute
- 344: Bohrungen

## Patentansprüche

1. Dosiersystem zur Dosierung fluider, schadstoffreduzierender Medien, insbesondere wässriger Harnstofflösungen, in ein Kraftfahrzeug-Abgassystem (220) mit folgenden Komponenten:
a) mindestens einem Vorratsbehälter (210) zur Speicherung mindestens einen fluiden, schadstoffreduzierenden Mediums;
b) mindestens eine mit dem mindestens einen Vorratsbehälter (210) verbundene Pumpe (216); und
c) mindestens eine mit der mindestens einen Pumpe (216) direkt oder über ein Rohrleitungssystem (214) verbundene selbstöffnende Düse (218),
- wobei die selbstöffnende Düse (218) mindestens eine Zufuhröffnung (312) für die Zufuhr fluider Medien aufweist,
- wobei die selbstöffnende Düse mindestens eine Düsenöffnung (314) aufweist, und
- wobei die mindestens eine Düsenöffnung (314) derart ausgestaltet ist, dass durch die mindestens eine Düsenöffnung fluide Medien in das Kraftfahrzeug-Abgassystem (220) eingespritzt werden können;
dabei weist die die mindestens eine selbstöffnende Düse (218) weiterhin folgende Komponenten auf:
c1) einen Düsenkörper (310) mit einem Federraum (320) und einem Nadelraum (318),
- wobei der Nadelraum (318) mindestens eine Zufuhröffnung (312) für die Zufuhr fluider Medien und mindestens eine Düsenöffnung (314) aufweist;
c2) mindestens eine in den Nadelraum (318) eingelassene Düsennadel (322),
- wobei die mindestens eine Düsennadel (322) in dem Nadelraum (318) beweglich und/oder drehbar gelagert ist, dergestalt, dass die mindestens eine Düsennadel (322) in mindestens einer Position und/oder Orientierung die mindestens eine Düsenöffnung (314) für fluide Medien dicht verschließt und in mindestens einer weiteren Position und/oder Orientierung die Düsenöffnung (314) für fluide Medien freigibt; und
c3) mindestens ein in den Federraum (320) eingelassenes Federelement (332),
- wobei das mindestens eine Federelement (332) eine Kraft und/oder ein Drehmoment auf die mindestens eine Düsennadel (322) ausübt, dergestalt, dass ohne Einwirkung zusätzlicher Kräfte und/oder Drehmomente die mindestens eine Düsennadel (322) die mindestens eine Düsenöffnung (314) für fluide Medien dicht verschließt;
**dadurch gekennzeichnet, dass** die mindestens eine selbstöffnende Düse (218)
c4) mindestens ein Dichtelement (336) aufweist, wobei das mindestens eine Dichtelement (336) ein Eindringen fluider Medien aus dem mindestens einen Nadelraum (318) in den mindestens einen Federraum (320) verhindert oder reduziert, und dass die Pumpe eine Dosierpumpe ist.

2. Dosiersystem nach dem vorhergehenden Anspruch, **dadurch gekennzeichnet, dass** ein mit einem Druck p₁ in den mindestens einen Nadelraum (318) eintretendes fluides Medium eine Kraft und/oder ein Drehmoment auf die mindestens eine Düsennadel (322) ausübt,
- wobei diese Kraft bzw. dieses Drehmoment der durch das mindestens eine Federelement (332) auf die mindestens eine Düsennadel (322) ausgeübten Kraft bzw. dem Drehmoment entgegenwirkt,
- wobei, wenn p₁ einen vorgegebenen Mindestdruck pₘᵢₙ überschreitet, die mindestens eine Düsenöffnung (314) für fluide Medien geöffnet wird.

3. Dosiersystem nach einem der beiden vorhergehenden Ansprüche, **dadurch gekennzeichnet, dass** das mindestens eine Dichtelement (336) ganz oder teilweise flexibel ausgestaltet ist,
- wobei das mindestens eine Dichtelement (336) die mindestens eine Düsennadel (322) und/oder das mindestens eine Federelement (332) flexibel mit dem Düsenkörper (310) verbindet.

4. Dosiersystem nach einem der drei vorhergehenden Ansprüche, wobei das mindestens eine Dichtelement (336) mindestens eine flexible Membran (336) aufweist.

5. Dosiersystem nach einem der vier vorhergehenden Ansprüche, wobei der Federraum (320) mindestens eine Druckentlastungsöffnung (316) aufweist.

6. Dosiersystem nach dem vorhergehenden Anspruch, wobei die mindestens eine Druckentlastungsöffnung mit Atmosphärendruck und/oder mit einem Druck im Kraftfahrzeug-Abgassystem (220) beaufschlagt ist.

7. Dosiersystem nach einem der vorhergehenden Ansprüche mit zusätzlich
d) mindestens einem Belüftungsventil (226), wobei das Belüftungsventil (226) derart ausgestaltet ist, dass es einen Zufluss von Luft und/oder Schutzgas in die mindestens eine Dosierpumpe (216) und/oder die mindestens eine selbstöffnende Düse (218) steuern kann.

8. Dosiersystem nach einem der vorhergehenden Ansprüche, **dadurch gekennzeichnet, dass** das Rohrleitungssystem (214) und/oder die mindestens eine Dosierpumpe (216) und/oder die mindestens eine selbstöffnende Düse (218) ganz oder teilweise mittels mindestens eines Heizelements (233) beheizbar ausgestaltet sind.

9. Dosiersystem nach einem der vorhergehenden Ansprüche mit zusätzlich
e) mindestens einem elektronischen Steuerungsgerät (234) zur Steuerung der mindestens einen Dosierpumpe (216) und/oder des mindestens einen Belüftungsventils (226) und/oder des mindestens einen Heizelements (233).

10. Dosiersystem nach einem der vorhergehenden Ansprüche mit zusätzlich
f) mindestens einer Vorrichtung zur Messung einer Temperatur und/oder eines Drucks des fluiden, schadstoffreduzierenden Mediums.

## Claims

1. Metering system for metering fluid, pollutant-reducing media, in particular aqueous urea solutions, into a motor vehicle exhaust system (220), having the following components:
a) at least one reservoir (210) for storing at least one fluid, pollutant-reducing medium;
b) at least one pump (216) which is connected to the at least one reservoir (210); and
c) at least one self-opening nozzle (218) which is connected to the at least one pump (216) directly or via a pipeline system (214),
- with the self-opening nozzle (218) having at least one supply opening (312) for the supply of fluid media,
- with the self-opening nozzle having at least one nozzle opening (314), and
- with the at least one nozzle opening (314) being designed such that fluid media can be injected into the motor vehicle exhaust system (220) through the at least one nozzle opening;
here, the at least one self-opening nozzle (218) also has the following components:
c1) a nozzle body (310) having a spring chamber (320) and a needle chamber (318),
- with the needle chamber (318) having at least one supply opening (312) for the supply of fluid media and having at least one nozzle opening (314);
c2) at least one nozzle needle (322) which is situated in the needle chamber (318),
- with the at least one nozzle needle (322) being movably and/or rotatably mounted in the needle chamber (318), in such a way that the at least one nozzle needle (322), in at least one position and/or orientation, sealingly closes off the at least one nozzle opening (314) for fluid media, and in at least one further position and/or orientation, opens up the nozzle opening (314) for fluid media; and
c3) at least one spring element (332) which is situated in the spring chamber (320),
- with the at least one spring element (332) exerting a force and/or a torque on the at least one nozzle needle (322), in such a way that, without the action of additional forces and/or torques, the at least one nozzle needle (322) sealingly closes off the at least one nozzle opening (314) for fluid media;
**characterized in that** the at least one self-opening nozzle (218)
c4) has at least one sealing element (336), with the at least one sealing element (336) preventing or reducing the infiltration of fluid media from the at least one needle chamber (318) into the at least one spring chamber (320), and **in that** the pump is a metering pump.

2. Metering system according to the preceding claim, **characterized in that** a fluid medium entering into the at least one needle chamber (318) with a pressure p₁ exerts a force and/or a torque on the at least one nozzle needle (322),
- with said force or said torque acting counter to the force or the torque exerted on the at least one nozzle needle (322) by the at least one spring element (332),
- with the at least one nozzle opening (314) for fluid media being opened when p₁ exceeds a predefined minimum pressure pₘᵢₙ.

3. Metering system according to one of the two preceding claims, **characterized in that** the at least one sealing element (336) is of fully or partially flexible design,
- with the at least one sealing element (336) connecting the at least one nozzle needle (322) and/or the at least one spring element (332) to the nozzle body (310) in a flexible manner.

4. Metering system according to one of the three preceding claims, with the at least one sealing element (336) having at least one flexible diaphragm (336).

5. Metering system according to one of the four preceding claims, with the spring chamber (320) having at least one pressure relief opening (316).

6. Metering system according to the preceding claim, with the at least one pressure relief opening being acted on with atmospheric pressure and/or with a pressure in the motor vehicle exhaust system (220).

7. Metering system according to one of the preceding claims, additionally having
d) at least one aeration valve (226), with the aeration valve (226) being designed such that it can control an inflow of air and/or protective gas into the at least one metering pump (216) and/or the at least one self-opening nozzle (218).

8. Metering system according to one of the preceding claims, **characterized in that** the pipeline system (214) and/or the at least one metering pump (216) and/or the at least one self-opening nozzle (218) are/is designed to be fully or partially heatable by means of at least one heating element (233).

9. Metering system according to one of the preceding claims, additionally having
e) at least one electronic control unit (234) for controlling the at least one metering pump (216) and/or the at least one aeration valve (226) and/or the at least one heating element (233).

10. Metering system according to one of the preceding claims, additionally having
f) at least one device for measuring a temperature and/or a pressure of the fluid, pollutant-reducing medium.

## Revendications

1. Système de dosage pour le dosage de milieux fluides réduisant les substances nocives, notamment de solutions d'urée aqueuses, dans un système de gaz d'échappement (220) d'un véhicule automobile, ayant les composants suivants :
a) au moins un réservoir (210) pour stocker au moins un milieu fluide réduisant les substances nocives ;
b) au moins une pompe (216) connectée à l'au moins un réservoir (210) ; et
c) au moins une buse (218) à ouverture automatique, connectée directement ou par le biais d'un système de conduite tubulaire (214) à l'au moins une pompe (216) ;
- la buse (218) à ouverture automatique présentant au moins une ouverture d'amenée (312) pour l'apport en milieux fluides,
- la buse à ouverture automatique présentant au moins une ouverture de buse (314), et
- l'au moins une ouverture de buse (314) étant réalisée de telle sorte que des milieux fluides puissent être injectés dans le système de gaz d'échappement (220) du véhicule automobile par l'au moins une ouverture de buse ;
l'au moins une buse (218) à ouverture automatique présentant en outre les composants suivantes :
c1) un corps de buse (310) avec un espace de ressort (320) et un espace d'aiguille (318),
- l'espace d'aiguille (318) présentant au moins une ouverture d'amenée (312) pour l'apport en milieux fluides et au moins une ouverture de buse (314) ;
c2) au moins une aiguille de buse (322) incorporée dans l'espace d'aiguille (318),
- l'au moins une aiguille de buse (322) étant montée de manière mobile et/ou rotative dans l'espace d'aiguille (318), de telle sorte que l'au moins une aiguille de buse (322), dans au moins une position et/ou orientation, ferme hermétiquement l'au moins une ouverture de buse (314) pour milieux fluides, et dans au moins une autre position et/ou orientation, libère l'ouverture de buse (314) pour milieux fluides ; et
c3) au moins un élément de ressort (332) incorporé dans l'espace de ressort (320),
- l'au moins un élément de ressort (332) exerçant une force et/ou un couple sur l'au moins une aiguille de buse (322), de telle sorte que sans l'action de forces supplémentaires et/ou de couples supplémentaires, l'au moins une aiguille de buse (322) ferme hermétiquement l'au moins une ouverture de buse (314) pour milieux fluides ;
**caractérisé en ce que** l'au moins une buse (218) à ouverture automatique
c4) présente au moins un élément d'étanchéité (336), l'au moins un élément d'étanchéité (336) empêchant ou réduisant l'entrée de milieux fluides de l'au moins un espace d'aiguille (318) dans l'au moins un espace de ressort (320), et **en ce que** la pompe est une pompe de dosage.

2. Système de dosage selon la revendication précédente, **caractérisé en ce qu'**un milieu fluide entrant avec une pression p₁ dans l'au moins un espace d'aiguille (318) exerce une force et/ou un couple sur l'au moins une aiguille de buse (322),
- cette force ou ce couple agissant à l'encontre de la force ou du couple exercé par l'au moins un élément de ressort (332) sur l'au moins une aiguille de buse (322),
- et lorsque p₁ dépasse une pression minimale prédéterminée pₘᵢₙ, l'au moins une ouverture de buse (314) pour milieux fluides étant ouverte.

3. Système de dosage selon l'une quelconque des deux revendications précédentes, **caractérisé en ce que** l'au moins un élément d'étanchéité (336) est configuré de manière complètement ou partiellement flexible,
- l'au moins un élément d'étanchéité (336) reliant l'au moins une aiguille de buse (322) et/ou l'au moins un élément de ressort (332) de manière flexible au corps de buse (310).

4. Système de dosage selon l'une quelconque des trois revendications précédentes, dans lequel l'au moins un élément d'étanchéité (336) présente au moins une membrane flexible (336).

5. Système de dosage selon l'une quelconque des quatre revendications précédentes, dans lequel l'espace de ressort (320) présente au moins une ouverture de décharge de pression (316).

6. Système de dosage selon la revendication précédente, dans lequel l'au moins une ouverture de décharge de pression est sollicitée par la pression atmosphérique et/ou par une pression dans le système de gaz d'échappement (220) du véhicule automobile.

7. Système de dosage selon l'une quelconque des revendications précédentes, comprenant en outre
d) au moins une soupape de ventilation (226), la soupape de ventilation (226) étant configurée de telle sorte qu'elle puisse commander un afflux d'air et/ou de gaz de protection dans l'au moins une pompe de dosage (216) et/ou l'au moins une buse (218) à ouverture automatique.

8. Système de dosage selon l'une quelconque des revendications précédentes, **caractérisé en ce que** le système de conduite tubulaire (214) et/ou l'au moins une pompe de dosage (216) et/ou l'au moins une buse (218) à ouverture automatique sont configurés de manière à pouvoir être chauffés complètement ou en partie au moyen d'au moins un élément de chauffage (233).

9. Système de dosage selon l'une quelconque des revendications précédentes, comprenant en outre
e) au moins un appareil de commande électronique (234) pour commander l'au moins une pompe de dosage (216) et/ou l'au moins une soupape de ventilation (226) et/ou l'au moins un élément de chauffage (233).

10. Système de dosage selon l'une quelconque des revendications précédentes, comprenant en outre :
f) au moins un dispositif pour mesurer une température et/ou une pression du milieu fluide réduisant les substances nocives.
